# EUROPEAN PATENT SPECIFICATION

(11) **EP 4 206 849 B1**
(45) Date of publication and mention of the grant of the patent: **23.04.2025**
(21) Application number: 23150125.5
(22) Date of filing: 03.01.2023
(51) Int. Cl.: G05D 1/244, G05D 1/661, G05D 105/15, G05D 109/10, G05D 111/10, G05D 107/20

(54) **AUTONOMOUS MOBILE GARDENING DEVICE AND METHOD FOR CONTROLLING SAME**
AUTONOME MOBILE GARTENVORRICHTUNG UND VERFAHREN ZUR STEUERUNG DAVON
DISPOSITIF MOBILE AUTONOME DE JARDINAGE ET SON PROCÉDÉ DE COMMANDE

(30) Priority: 04.01.2022 CN 202210007536
(43) Date of publication of application: 05.07.2023
(73) Proprietor: Willand (Beijing) Technology Co., Ltd., Beijing 100192 (CN)
(72) Inventor: YU, Tianning, Beijing, 100192, (CN); CUI, Zongwei, Beijing, 100192, (CN)
(74) Representative: Kraus & Lederer PartGmbB

(56) References cited:
- US-A1- 2005 189 899
- US-A1- 2016 091 899
- US-A1- 2017 364 088
- US-A1- 2019 072 975
- US-A1- 2019 155 295

## Description

### TECHNICAL FIELD

The present disclosure relates to the technical field of gardening devices, and in particular to, an autonomous mobile gardening device and a method for controlling the same.

### BACKGROUND

An existing autonomous mobile gardening device (also known as, e.g., a self-help gardening device or smart gardening device or automatic gardening device), such as an automatic lawn mower, can automatically mow grass autonomously or uncontrolledly, thereby reducing time occupation of a user and repetitive work of the user.

In order to realize the autonomous working of the autonomous mobile device, it is necessary to manually restrict its work region. For example, one solution is: to bury wires at the edge/boundary of the work region and an edge of an obstacle within the work region, so that the autonomous mobile device can identify the edge of the work region and the edge of the obstacle, thereby preventing the autonomous mobile device from traveling out of the restricted work region and colliding with the obstacle within the work region. The problem of this solution is that the wires should be buried by professionals, which is time-consuming and cost-consuming.

In addition, when returning to a charging station, the autonomous mobile device should perform docking following the boundary of the work region or following the guiding wires additionally laid for the charging station. With the above solution, the user should perform certain reconstruction on the work region, and relocate the buried wires accordingly when the charging station moves, which is time-consuming and labor-consuming.

US2019/155295 A1 discloses a method and a system for docking a robot with a charger docking station. The method includes receiving an initial pose and receiving a mating pose associated with the robot charger docking station, performing a first navigation from a location to the initial pose, and performing a second navigation of the robot from the initial pose to the mating pose. The second navigation may proceed substantially along an arc path from the initial pose to the mating pose, thereby, upon arriving at the mating pose, an electrical charging port of the robot mates with an electrical charging assembly. The arc path may be associated with a section of a unique circle having a radius and a center equidistant from the initial pose and the mating pose. Controlling for error may include a proportional control and/or weighted control or switching between the controls to maintain an error below a threshold.

US2017/364088 A1 is directed to a method for employing learnable boundary positions for bounding operation of a robotic vehicle. The method includes detecting temporary indicia of a boundary on a parcel via at least one sensor of a robotic vehicle, generating coordinate or location based boundary information 5 based on the temporary indicia, and operating the robotic vehicle within the boundary based on the generated coordinate or location based boundary information.

US2005/189899 A1 discloses a robot apparatus to be electrically charged autonomously. An electrical charging device is provided with two markers, namely a main marker and a sub-marker, and the heights of the markers are pre-stored in the robot apparatus. When the robot apparatus is to find the direction and the distance to the electrical charging device, a CCD camera finds the direction vector of the marker from the photographed image. This direction vector is transformed into a position vector of a camera coordinate system and further into a position vector of the robot coordinate system. The coordinate in the height-wise direction in the robot coordinate system is compared to the pre-stored height to find the distance between the markers and the robot apparatus and the direction of the robot apparatus.

US2019/0072975A1 is directed to a method for controlling a moving robot. In US2019/0072975A1, the controller extracts information related to three longitudinal line segments from the image captured by the camera, and retrieves the information related to the extracted longitudinal line segments from the pattern of the marker stored in the memory. The information related to the longitudinal line segments may include information related to angles formed by the respective longitudinal line segment with respect to a preset reference axis and information related to distances between the longitudinal line segments extracted from the image acquired by the camera. The controller detects a direction in which the camera is oriented with respect to the reference axis using the above information, and thus extracts information related to a posture of the main body.

US2016/091899A1 is directed to a method for guiding an automomous vehicle towards a docking station. In US2016/091899A1, a navigation control module places the robot in front of and as close to the docking station allowing for an angular error, and within a predetermined maximum radius of the docking station. When this is achieved, control of the robot is handed over to a docking control module, and the goal of the docking control module is to guide the robot onto the docking station from its initial position with the predermined distance and angular of the docking station as delived by the navigation control module.

### SUMMARY

In view of the above problems, embodiments of the present disclosure are presented to provide an autonomous mobile device and a method for controlling the same, to at least solve the problem that an existing autonomous mobile device is difficult to perform docking.

A method for controlling an autonomous mobile gardening device is provided according to claim 1. An autonomous mobile gardening device is provided according to claim 10.

A computer storage medium is provided according to claim 11.

Preferred embodiments are provided in the dependent claims.

With this method, the autonomous mobile device can be controlled to move along the second planned path, so as to quickly reach the charging station. This method for controlling an autonomous mobile device adopts a positioning approach with different accuracies and computing loads for different distances between the autonomous mobile device and the charging station, thereby not only guaranteeing the positioning and navigation accuracy, but also improving the positioning and navigation efficiency, and adopts a positioning approach with a low computing load when the distance is large, thereby reducing the data processing costs, contributing to saving power, and increasing the cruising power of the autonomous mobile device. In addition, wires are not required to be buried for the positioning approaches used in the navigation process, thereby reducing reconstruction costs of a work region, and reducing use costs of the autonomous mobile device. In addition, it is very convenient to move the charging station without the need for relocating the buried wires, thereby improving the use convenience.

### BRIEF DESCRIPTION OF THE DRAWINGS

To more clearly describe the technical solutions of the embodiments of the present disclosure or existing technologies, the accompanying drawings to be used in the description of the embodiments or the existing technologies will be briefly introduced below. Apparently, the drawings described below are some embodiments of the present disclosure. For those of ordinary skills in the art, other drawings may also be obtained based on these drawings without making creative work.
Fig. 1A is a schematic diagram of a first identifier provided in Embodiment I of the present disclosure;
Fig. 1B is a schematic diagram of a second identifier provided in Embodiment I of the present disclosure.
Fig. 1C is a schematic diagram of a third identifier provided in Embodiment I of the present disclosure;
Fig. 1D is a schematic diagram of a fourth identifier provided in Embodiment I of the present disclosure;
Fig. 1E is a schematic flowchart of steps of a method for controlling an autonomous mobile device provided in Embodiment I of the present disclosure;
Fig. 1F is a schematic diagram of a scenario provided in Embodiment I of the present disclosure;
Fig. 2 is a schematic flowchart of steps of a method for controlling an autonomous mobile device provided in Embodiment II of the present disclosure;
Fig. 3 is a schematic flowchart of steps of a method for controlling an autonomous mobile device provided in Embodiment III of the present disclosure;
Fig. 4 is a structural block diagram of an apparatus for controlling an autonomous mobile device in Embodiment IV of the present disclosure; and
Fig. 5 is a schematic block diagram of an apparatus for controlling an autonomous mobile device in Embodiment V of the present disclosure.

### DETAILED DESCRIPTION OF EMBODIMENTS

For the convenience of description and understanding, before the description of the method for controlling an autonomous mobile device, the structure and working scenario of the autonomous mobile device are briefly described as follows:
In the present embodiment, the autonomous mobile device may be an automatic lawn mower. Of course, in other embodiments, the autonomous mobile device may also be other self-help gardening devices.

The automatic lawn mower may be configured to trim a lawn to guarantee that the grass height in the lawn is satisfied. In order to realize automatic grass cutting, the automatic lawn mower mainly comprises a housing; and a drive wheel set, a mowing knife set, a controller, an image collector, and the like provided on the housing. The drive wheel set can drive the housing and components thereon to move. The mowing knife set is used for cutting grass. The controller is connected with electrical signals of, e.g., the drive wheel set, the mowing knife set, and the image collector respectively, for receiving an environment image collected by the image collector, and processing the environment image to determine information, such as a pose of the automatic lawn mower, and whether there is an obstacle, and then to control working of the drive wheel set and the mowing knife set, thus automatically and smartly cutting grass.

Prior to using the automatic lawn mower, a user can fix a charging station at an appropriate position within or outside a work region. When the automatic lawn mower is used for a first time, the automatic lawn mower may be directed for mapping. For example, the automatic lawn mower is made to move within the work region to collect an image frame within the work region, and process the image frame, thereby achieving mapping.

Similarly, the automatic lawn mower may be directed to move to a position where the charging station is located, and first positioning (such as multi-sensor fusion positioning, or visual SLAM positioning) and second positioning may be performed respectively, to obtain a pose of the charging station in a geographic coordinate system, a pose of the charging station in a visual coordinate system of visual SLAM mapping, and a pose of the charging station in a second coordinate system (i.e., a charging station coordinate system), for later use.

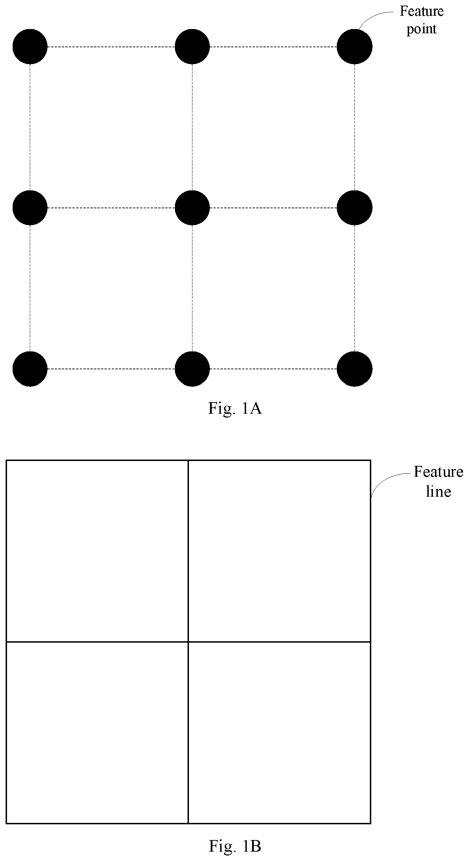

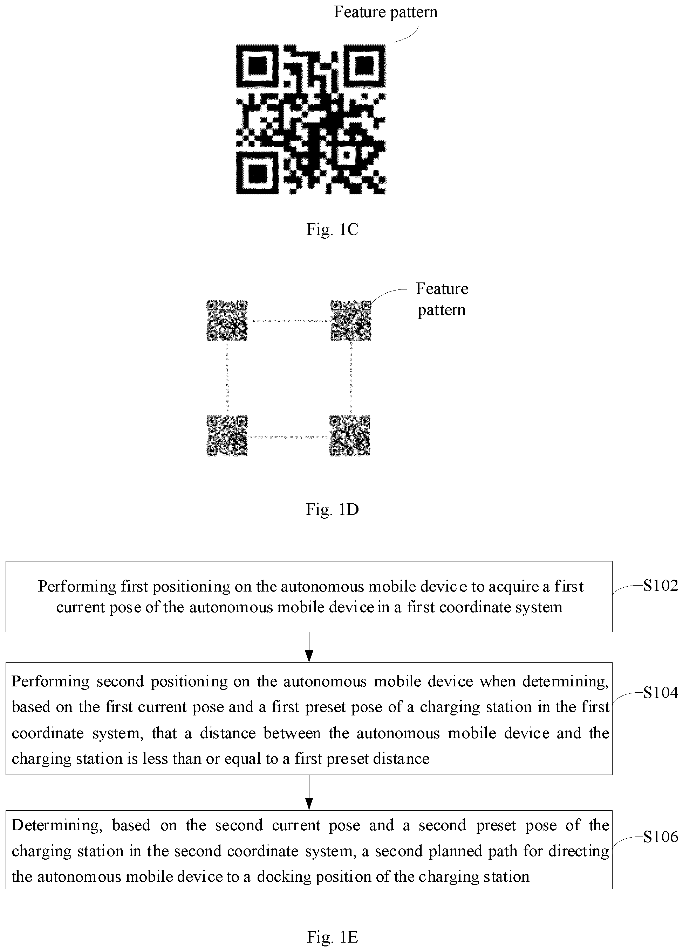

In order to more conveniently position the charging station and facilitate subsequent visual identification and positioning, an identifier is provided on the charging station or on a fixed object near the charging station. The identifier comprises an element array composed of feature elements, and the feature elements comprise at least one of: a feature point, a feature line, and a feature pattern. As shown in Fig. 1A to Fig. 1D, schematic diagrams of several different identifiers are shown.

The identifiers may be an element array presenting a planar or three-dimensional arrangement, and may be composed of printings on the surface of the charging station, or composed of stickers on the surface of the charging station, or composed of plastic or metal with different colors from the charging station, or composed of light emittable lamp strips and lamp beads. Of course, the identifiers may also be provided on the fixed object near the charging station, and their poses relative to the charging station are constant.

After lawn mowing is completed or during lawn mowing, the automatic lawn mower may need to return to the charging station. In this case, the controller of the automatic lawn mower needs to direct the automatic lawn mower to move to a position of the charging station and achieve docking. In the present embodiment, the automatic lawn mower returns to the charging station in accordance with the following method for controlling an autonomous mobile device.

It should be noted that this method can be adapted to return to any number of charging stations. Automatically returning to the charging station may be achieved for one or more charging stations provided in the work region. When there is a plurality of charging stations, the user may specify one of the charging stations as the charging station to which the autonomous lawn mower returns, or select any one of the charging stations as the charging station to which the autonomous lawn mower returns, or select a nearest charging station as the charging station to which the autonomous lawn mower returns. This is not limited.

### Embodiment I

An implementation process of a method for controlling an autonomous mobile device is illustrated as follows:
As shown in Fig. 1E, a flow chart of steps of a method for controlling an autonomous mobile device is shown. In the present embodiment, the method includes the following steps:
Step S102: performing first positioning on the autonomous mobile device to acquire a first current pose of the autonomous mobile device in a first coordinate system.

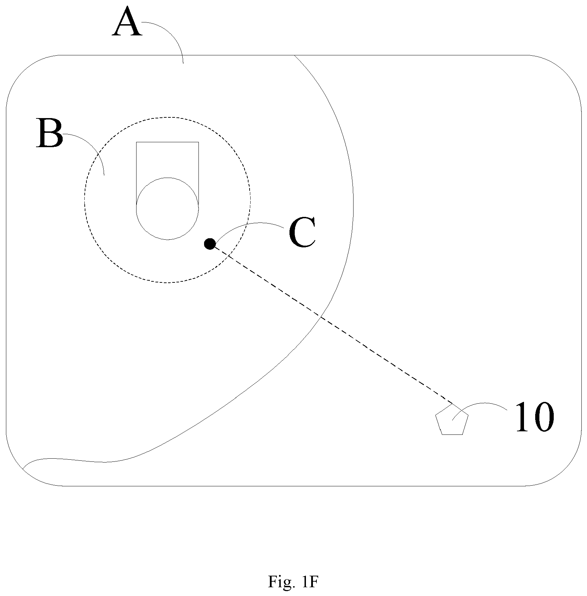

In an example, a first planned path may be, in response to an instruction for returning to a charging station, a path for returning to the charging station determined by the autonomous mobile device. For example, Fig. 1F shows a schematic diagram of a usage scenario, in which a rounded rectangular block represents a work region. The autonomous mobile device 10 receives an instruction for returning to the charging station during grass cutting (for example, when a user sends the instruction for returning to the charging station via a control APP, or the autonomous mobile device 10 detects that its own battery power is insufficient and needs to return to the charging station, the autonomous mobile device may receive the instruction for returning to the charging station). The instruction for returning to the charging station may carry information of the charging station, such as the serial number or name of the charging station. This is not limited.

The autonomous mobile device may acquire, based on the information of the charging station and a currently used positioning approach, a pre-stored pose of the charging station in a coordinate system corresponding to the positioning approach, and then determine a path to the charging station based on the pose positioned by the autonomous mobile device and the pre-stored pose of the charging station, for use as the first planned path (the path shown by the dotted line in Fig. 1F).

When the autonomous mobile device moves along the first planned path, first positioning is performed once at intervals. The first positioning may be performed by different specific positioning approaches as required, for example, by satellite positioning or visual SLAM positioning. This is not limited. The first current pose of the autonomous mobile device in the first coordinate system may be obtained by the first positioning each time. The first coordinate system may be different for different positioning approaches. For example, when the satellite positioning is used, the first coordinate system may be a geographic coordinate system (e.g., a geocentric coordinate system or an east-north-up coordinate system). For another example, when the visual SLAM positioning is used, the first coordinate system may be a visual coordinate system.

The first current pose comprises a position (which may be represented by X, Y and Z coordinates in the first coordinate system) and an orientation (which may be represented by a pitch angle, a yaw angle and a roll angle relative to the first coordinate system) of the autonomous mobile device.

Based on the first current pose of the autonomous mobile device and a first preset pose of the charging station in the first coordinate system, a distance between the autonomous mobile device and the charging station in the first coordinate system may be computed (the distance is consistent with a real distance). If the distance is greater than a first preset distance (the first preset distance may be determined as required, is not limited, and may be, e.g., 1 m, 5 m, or 10 m), it means that there is a large distance between the autonomous mobile device and the charging station, the first positioning with less computing workload and relatively low positioning accuracy may continue to be used for positioning, and the autonomous mobile device moves along the first planned path.

If the distance is less than or equal to the first preset distance, it means that the autonomous mobile device has reached the vicinity of the charging station, step S 104 may be executed to use second positioning with higher positioning accuracy than the first positioning for positioning, thereby guaranteeing the accuracy and efficiency of reaching the charging station, and preventing the efficiency of reaching the charging station from being affected by a very large directing deviation caused by insufficient positioning accuracy.

Step S104: performing second positioning on the autonomous mobile device when determining, based on the first current pose and a first preset pose of a charging station in the first coordinate system, that a distance between the autonomous mobile device and the charging station is less than or equal to a first preset distance, to obtain a second current pose of the autonomous mobile device in a second coordinate system.

In an example, the second positioning comprises positioning by detecting an identifier on the charging station using the autonomous mobile device.

For example, the identifier is provided at a position on or near the charging station, and a relative position between the identifier and the charging station is constant. The autonomous mobile device may capture an environment image of a surrounding environment using an image collector. If the environment image is an image comprising the identifier, a second current pose of the image collector in the second coordinate system may be determined based on a pose of the identifier in the environment image, a real pose of the identifier in the geographic coordinate system, and imaging parameters of the image collector. The second coordinate system may be a charging station coordinate system established based on the charging station. For example, the second coordinate system takes a pose of the charging station as a coordinate origin. The charging station coordinate system may be coincident with a certain geographic coordinate system, or may be independent of the geographic coordinate system. Alternatively, the second coordinate system may take a pose of the autonomous mobile device as the coordinate origin.

In the present embodiment, a positioning accuracy of the second positioning is greater than a positioning accuracy of the first positioning, such that the success rate and accuracy of docking are better.

Step S106: determining, based on the second current pose and a second preset pose of the charging station in the second coordinate system, a second planned path for directing the autonomous mobile device to a docking position of the charging station.

Since the second current pose has a higher positioning accuracy than the first current pose, there may be some difference between a position and an orientation of the autonomous mobile device indicated by the second current pose and those indicated by the first current pose. In order to improve the efficiency of reaching the charging station, a traversable second planned path may be planned based on the second current pose and the second preset pose of the charging station in the second coordinate system (The pose may be pre-stored. This is not limited).

Thus, the autonomous mobile device may be controlled to move along the second planned path, so as to quickly reach the docking position of the charging station (a position corresponding to the point C in Fig. 1F), and then reach the charging station.

The method for controlling an autonomous mobile device adopts a positioning approach with different accuracies and computing loads for different distances between the autonomous mobile device and the charging station, thereby not only guaranteeing the positioning and navigation accuracy, but also improving the positioning and navigation efficiency, and adopts a positioning approach with a low computing load when the distance is large, thereby reducing the data processing costs, contributing to saving power, and increasing the cruising power of the autonomous mobile device. In addition, wires are not required to be buried for the positioning approaches used in the navigation process, thereby reducing reconstruction costs of a work region, and reducing use costs of the autonomous mobile device. In addition, it is very convenient to move the charging station without the need for relocating the buried wires, thereby improving the use convenience.

### Embodiment II

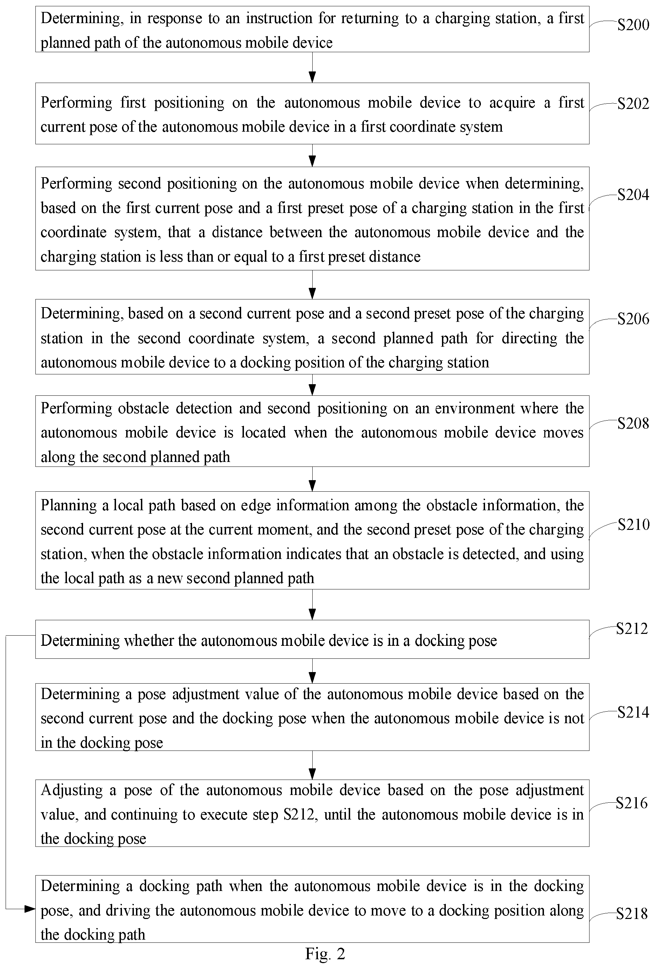

By referring to Fig. 2, a schematic flowchart of steps of a method for controlling an autonomous mobile device in the present embodiment II is shown.

In the present embodiment, the method includes the following steps:
Step S200: determining, in response to an instruction for returning to a charging station, a first planned path of the autonomous mobile device.

In an example, a user may send the instruction for returning to the charging station to the autonomous mobile device via a control APP (application program), to instruct the autonomous mobile device to return to the charging station. The charging station may be specified by the user in the control APP, or may be autonomously determined by the autonomous mobile device in accordance with a given rule. The given rule may be, e.g., a nearest charging station or a randomly determined charging station. This is not limited.

In another example, if the autonomous mobile device detects that its own battery power is lower than a set value (such as 20% of maximum battery power) during working, it may autonomously trigger the instruction for returning to the charging station.

The instruction for returning to the charging station comprises information of the charging station, such as at least one of the serial number or name of the charging station, or other information that can indicate the charging station.

In response to the instruction for returning to the charging station, the autonomous mobile device may position itself by an appropriately selected positioning approach. For example, since the autonomous mobile device will perform positioning once at intervals during moving, the positioning may be performed by an approach identical to the last positioning approach. If a satellite, a wheel speedometer, and an IMU (inertial navigation system) are used in combination as the last positioning approach, the positioning approach of using the satellite, the wheel speedometer, and the IMU (inertial navigation system) in combination may also be used for the present positioning.

For example, a specific positioning process includes: solving a satellite positioning pose of the autonomous mobile device based on a received satellite signal, determining a pose of the wheel speedometer based on data of the wheel speedometer, acquiring an inertial navigation pose outputted from the IMU, aligning the satellite positioning pose, the pose of the wheel speedometer, and the inertial navigation pose, and then performing Kalman filtering on the alignment result to obtain a pose after multi-sensor fusion for use as a positioning pose of current positioning.

Of course, in other embodiments, other positioning approaches that can achieve multi-sensor fusion may also be used for positioning the autonomous mobile device. This is not limited.

Since the positioning pose of the current positioning is a pose of the autonomous mobile device in a geographic coordinate system, a path to the charging station may be determined based on the positioning pose of the current positioning and the pre-stored pose of the charging station in the geographic coordinate system, for use as the first planned path.

A feasible approach for determining the first planned path is: determining a shortest path between the positioning pose of the current positioning and the pre-stored pose of the charging station in the geographic coordinate system, for use as the first planned path.

Alternatively, another feasible approach for determining the first planned path is: selecting traversable trajectory points between the autonomous mobile device and the charging station from historical trajectory points of the autonomous mobile device (the historical trajectory points may be represented by corresponding poses at historical moments), and determining a shortest traversable path based on the traversable trajectory points for use as the first planned path.

Since the historical trajectory points are real positions travelled by the autonomous mobile device, the path determined based on the historical trajectory points is more reliable with a greater probability of enabling the autonomous mobile device to pass, thereby not only effectively reducing the probability of touching an obstacle, but also effectively avoiding the problem that the autonomous mobile device cannot pass due to, e.g., a narrow traversable space.

When the traversable trajectory points are selected, the positioning pose of the current positioning may be used as a center point, a historical trajectory point that is located between the autonomous mobile device and the charging station and is closest to the center point may be selected, the historical trajectory point may be added into a trajectory set, and the selected historical trajectory point may be used as a new center point. The above processes are repeated, until a distance between the selected traversable trajectory point and the charging station is less than a distance threshold (which may be determined as required). The first planned path may be determined based on historical trajectory points in the trajectory set.

When the autonomous mobile device is controlled to move along the first planned path, in order to guarantee its movement security, the autonomous mobile device can perform obstacle avoidance, to avoid an obstacle, if found, on the first planned path. In addition, step S202 may also be executed.

Step S202: performing first positioning on the autonomous mobile device to acquire a first current pose of the autonomous mobile device in a first coordinate system.

In an example, in order to improve the navigation efficiency and make full use of the advantages of different positioning approaches, step S202 includes the following substeps:
Substep S2021: determining whether the autonomous mobile device is in a mapped region.

The mapped region may be a region where a map is established by visual SLAM. As shown in Fig. 1F, the region A is a mapped region, i.e., information about objects and obstacles in the region A is acquired by visual SLAM, thereby acquiring visual mapping data.

A feasible approach for determining whether the autonomous mobile device is in the mapped region may be: collecting an environment image using an image collector, matching the environment image with an image frame comprised in the visual mapping data, determining, if the environment image matches an image frame, that the autonomous mobile device is in the mapped region, and executing substep S2021; and otherwise, determining, if the environment image matches no image frame, that the autonomous mobile device is not in the mapped region, and executing substep S2023.

Since a positioning accuracy of visual SLAM positioning is higher than a positioning accuracy of multi-sensor fusion positioning based on satellite positioning, the visual SLAM positioning may be used when the autonomous mobile device is in the mapped region, thereby improving the positioning accuracy. In addition, information of some fixed obstacles in the mapped region has been collected in the visual mapping data, thereby effectively avoiding obstacles, and guaranteeing the movement security of the autonomous mobile device.

Substep S2022: performing first positioning on the autonomous mobile device based on visual mapping data corresponding to the mapped region when the autonomous mobile device is in the mapped region, to obtain the first current pose of the autonomous mobile device in the first coordinate system.

When the autonomous mobile device is in the mapped region, the first positioning may be the visual SLAM positioning, and accordingly, the first coordinate system is a visual coordinate system corresponding to the visual mapping data (i.e., the coordinate system during visual SLAM mapping).

In a feasible implementation, substep S2022 may be implemented as: performing feature identification on the environment image collected by the image collector of the autonomous mobile device; and computing the first current pose of the autonomous mobile device in the first coordinate system based on identified feature data and the visual mapping data.

The environment image may be an environment image that is collected when determining whether the autonomous mobile device is in the mapped region, or may be a re-collected environment image. This is not limited.

A trained neural network model (such as a convolutional neural network model, CNN) is used to perform feature identification on the environment image, thereby extracting the feature data of the environment image. The neural network model may be consistent with the neural network model used for SLAM mapping.

The feature data is matched with the visual mapping data to obtain a matched image frame, and then determine the first current pose of the autonomous mobile device based on the pose when the matched image frame is collected and a mapping relationship between the environment image and the matched image frame.

In addition, it should be noted that if the visual SLAM positioning is currently used, while the multi-sensor fusion positioning based on the satellite positioning is used for the last positioning, a new first planned path may be re-planned based on the current first current pose and the first preset pose of the charging station. This is because the visual mapping data comprises obstacle information, so that the new first planned path can effectively avoid obstacles in the mapped region, thus improving the reliability.

The approach for determining the new first planned path may be the same as the above approach for determining the first planned path, and thus the description will not be repeated.

Substep S2023: at least acquiring satellite positioning data corresponding to the autonomous mobile device when the autonomous mobile device is not in the mapped region; and determining a pose of the autonomous mobile device in a geographic coordinate system corresponding to the satellite positioning data at least based on the satellite positioning data, for use as the first current pose.

If the autonomous mobile device is not in the mapped region, the satellite positioning approach may be used for positioning. In this case, the first coordinate system is the geographic coordinate system.

In the present embodiment, the satellite signal (used as the satellite positioning data) may be received using a receiver carried on the autonomous mobile device, and then the satellite positioning pose of the autonomous mobile device may be solved based on the satellite signal, for use as the first current pose. Alternatively, the first positioning pose is determined based on the satellite positioning data, wheel speedometer data, and IMU data, to further improve the positioning accuracy. The determining approach is the same as the approach for determining the pose by multi-sensor fusion in step 200, so that the description will not be repeated.

If the first current pose is a pose determined by multi-sensor fusion such as the satellite positioning, a distance between the autonomous mobile device and the charging station is determined based on the first current pose and the first preset pose of the charging station in the geographic coordinate system. If the distance is less than or equal to a first preset value (for example, 5 m), it means that the autonomous mobile device moves into a region B near the charging station, more accurate navigation may be performed, and therefore, step S204 may be executed; and otherwise, the autonomous mobile device may continue to move along the first planned path.

If the first current pose is a pose determined by visual SLAM positioning, the distance between the autonomous mobile device and the charging station is determined based on the first current pose and the first preset pose of the charging station in the visual coordinate system. If the distance is less than or equal to the first preset value, it means that the autonomous mobile device moves into the region B near the charging station, more accurate navigation may be performed, and therefore, step S204 may be executed; and otherwise, the autonomous mobile device may continue to move along the first planned path.

Step S204: performing second positioning on the autonomous mobile device when determining, based on the first current pose and a first preset pose of a charging station in the first coordinate system, that a distance between the autonomous mobile device and the charging station is less than or equal to a first preset distance, to obtain a second current pose of the autonomous mobile device in a second coordinate system.

In an example, the second positioning comprises feature positioning of the charging station, and a positioning accuracy of the second positioning is greater than a positioning accuracy of the first positioning.

Step S204 includes the following substeps:
Substep S2041: acquiring an environment image collected by the image collector of the autonomous mobile device.
Substep S2042: inputting the environment image into a neural network model for identifying an identifier, and acquiring an identification result outputted from the neural network model.

The neural network model may be a pre-trained model capable of identifying the identifier. For example, the model may be a convolutional neural network model or other appropriate models. This is not limited.

The neural network model may determine whether the environment image comprises an identifier. If the identifier is identified, its pose information in the environment image may be identified. In this case, the identification result comprises the pose information of the identifier in the environment image.

The pose information of the identifier at least comprises categories and poses of feature elements in the identified identifier. The categories of the feature elements are, for example, a feature point, a feature line, or a feature pattern (such as QR code). The poses of the feature elements comprise a distance and an angle between the feature elements. The angle between the feature elements may be an angle between a line between two adjacent feature elements and a line formed by another feature element, or may be an angle between a line between two adjacent feature elements and another reference line (e.g., a horizontal line). The poses of the feature elements are used to indicate, e.g., positions and orientations thereof in the environment image.

If the identifier is identified, substep S2043 is executed; and otherwise, substep S2044 may be executed.

Substep S2043: determining, when the environment image comprises an image of the identifier, the second current pose of the autonomous mobile device in the second coordinate system based on pose information of the identifier in the environment image and a real pose of the identifier in the second coordinate system.

In an example, the real pose of the identifier comprises a spatial distance between two adjacent feature elements of a given category in the identifier in the second coordinate system. The spatial distance may be a distance thereof in the second coordinate system.

Substep S2043 is implemented as: determining the distance and the angle between the two adjacent feature elements of the given category based on the categories and the poses of the feature elements in the identifier; and determining the second current pose of the autonomous mobile device in the second coordinate system based on the distance and the spatial distance between the two adjacent feature elements of the given category and whether there is an angle therebetween.

When the feature elements are, e.g., feature points, identified feature points may be determined based on the pose information of the identifier, and then a distance and an angle between two adjacent feature points in the environment image may be determined.

The second current pose of the autonomous mobile device in the second coordinate system may be computed using a PNP algorithm based on a known actual spatial distance between the two adjacent feature points, the distance determined from the environment image, whether there is an angle, and imaging parameters of the image collector.

Substep S2044: adjusting the pose of the autonomous mobile device when the environment image does not comprise the image of the identifier, and acquiring the environment image after adjusting a pose collected by the image collector of the autonomous mobile device, until a termination condition is satisfied.

When the environment image does not comprise the identifier, it means that the oritentation of the image collector of the autonomous mobile device may not be correct, the pose of the autonomous mobile device may be adjusted (by horizontally rotating the autonomous mobile device 5 degrees clockwise), then the environment image may be collected, and substep S2042 may be repeated.

A feasible termination condition may be: identifying the identifier from the environment image, so that the second current pose may be determined, and thus the adjustment may be terminated.

Alternatively, another feasible termination condition may be: performing N consecutive pose adjustments, where N may be determined as required, for example, N is 72 in case of 5 degrees for each adjustment, i.e., the identifier still cannot be identified from the environment image after one revolution. Therefore, it is less probable to collect the environment image comprising the identifier after the adjustment is continued, so that the adjustment may be stopped.

After the second current pose is obtained, step S206 may be executed.

Step S206: determining, based on the second current pose and a second preset pose of the charging station in the second coordinate system, a second planned path for directing the autonomous mobile device to the charging station, to control the autonomous mobile device to move along the second planned path.

In an example, because the second positioning is more accurate, the second current pose may be different from the first current pose of the last positioning. Therefore, the path may be re-planned based on the second current pose. The re-planned path is the second planned path.

For example, step S206 may be implemented as: determining, based on the second current pose and the second preset pose of the charging station, a traversable global path between the autonomous mobile device and a docking position of the charging station for use as the second planned path.

The traversable global path may be a straight line between the second current pose and the second preset pose, or may be a shortest traversable global path determined based on the historical trajectory points. This is not limited.

The autonomous mobile device may move along the second planned path. Alternatively, in order to guarantee the security in the moving process and prevent the autonomous mobile device from being damaged by collision with an obstacle, or prevent the autonomous mobile device from damaging an obstacle (such as a living animal), the method further includes step S208 and step S210.

Step S208: performing obstacle detection and second positioning on an environment where the autonomous mobile device is located when the autonomous mobile device moves along the second planned path, to obtain obstacle information and the second current pose of the autonomous mobile device at a current moment.

The obstacle detection may be implemented as: inputting the collected environment image into a neural network model for obstacle detection, to acquire obstacle information outputted therefrom. The obstacle information includes, but is not limited to, an obstacle identifier, obstacle edge information, and obstacle pose information.

If the outputted obstacle information is empty, it means that no obstacle is identified, and the autonomous mobile device may continue to move along the second planned path. If the outputted obstacle information is not empty, it means that an obstacle is detected, and step S210 may be executed.

Step S210: planning a local path based on edge information among the obstacle information, the second current pose at the current moment, and the second preset pose of the charging station, when the obstacle information indicates that an obstacle is detected, and using the local path as a new second planned path.

For example, based on the second current pose and the second preset pose, local movement along an edge of the obstacle is planned, and a shortest local path is used as the new second planned path. A specific planning approach is identical or similar to the above planning approach, so that the description will not be repeated.

The autonomous mobile device may continue to move along the new second planned path. When the autonomous mobile device moves along the second planned path, the second positioning may be performed once at intervals to obtain a new second current pose, and selectively determine whether to execute step S208 and step S210.

The method further includes steps S212 to S218. Steps S212 to S218 may be executed at appropriate time. For example, when the distance between the autonomous mobile device and the charging station is determined to be less than or equal to the second preset value (which may be determined as required, such as 50 cm) based on the second current pose and the second preset pose, it means that the two are close enough to perform docking, so that step S212 may be executed; and otherwise, the autonomous mobile device may continue to move along the second planned path.

Step S212: determining whether the autonomous mobile device is in a docking pose.

In an example, the docking pose may be a pose in which the autonomous mobile device is aligned with the charging station. The docking pose may be a preset pose. After the second current pose of the autonomous mobile device is solved based on the collected environment image comprising the identifier. If the second current pose is consistent with a preset docking pose or a deviation between the second current pose and the preset docking pose is less than a deviation threshold (which may be determined as required. This is not limited), the autonomous mobile device is determined to be in the docking pose, and step S218 is executed; and otherwise, the autonomous mobile device is determined not be in the docking pose, and step S214 is executed.

Step S214: determining a pose adjustment value of the autonomous mobile device based on the second current pose and the docking pose when the autonomous mobile device is not in the docking pose.

For example, a deviation value is determined based on the second current pose and the docking pose, and the deviation value is used as the pose adjustment value. The pose adjustment value is, e.g., adjusting the yaw angle leftward by 10 degrees.

Step S216: adjusting the pose of the autonomous mobile device based on the pose adjustment value, and continuing to execute step S212, until the autonomous mobile device is in the docking pose.

The autonomous mobile device is controlled to move based on the pose adjustment value to adjust its pose. After the adjustment, the environment image may be re-collected using the image collector, to solve the new second current pose based on the environment image, and return to step S212, until the autonomous mobile device is in the docking pose.

Step S218: determining a docking path when the autonomous mobile device is in the docking pose, and driving the autonomous mobile device to move to the docking position along the docking path.

The docking path may be a straight path from the docking pose to the second preset pose. The autonomous mobile device can complete docking by moving in the docking pose along the docking path, thus realizing docking of the autonomous mobile device with the charging station.

Alternatively, in a feasible implementation, the autonomous mobile device may be controlled to move from the docking position to the charging position following the guiding wires on the charging station, thereby quickly and accurately reaching the charging position, and guaranteeing accurately docking with the charging position.

Alternatively, when it is necessary to change the pose of the charging station, the user may directly move the charging station to a desired position, adjust the charging station to a desired orientation, then only need to place the autonomous mobile device on the charging station, and start its positioning module. The positioning module records and updates the pose of the charging station after the charging station is relocated, thus subsequently directing the autonomous mobile device to automatically return to the charging station completely without the need for relocating the buried wires, improving the convenience, and reducing the costs of relocating the charging station.

To sum up, this method simplifies the docking with the charging station without relying on boundary and guiding wires installed by the user. The user is not required to provide a work region with the boundary or guiding wires, thus reducing the site reconstruction, quickly adapting to position changes of the charging station, and improving the user experience.

When the autonomous mobile device is directed to automatically return to the charging station, and when the distance between the autonomous mobile device and the charging station is greater than the first preset value, the first positioning with a relatively low positioning accuracy is used for positioning and direction; while when the distance is less than or equal to the first preset value, the second positioning based on features of the charging station and with an accuracy higher than the first positioning is used for positioning and direction, and the charging station identification and alignment directions are completed to achieve automatic docking, thereby not only guaranteeing the docking accuracy and reliability, but also reducing the computing load and costs, saving power, and improving the cruising power.

### Non-claimed embodiment III

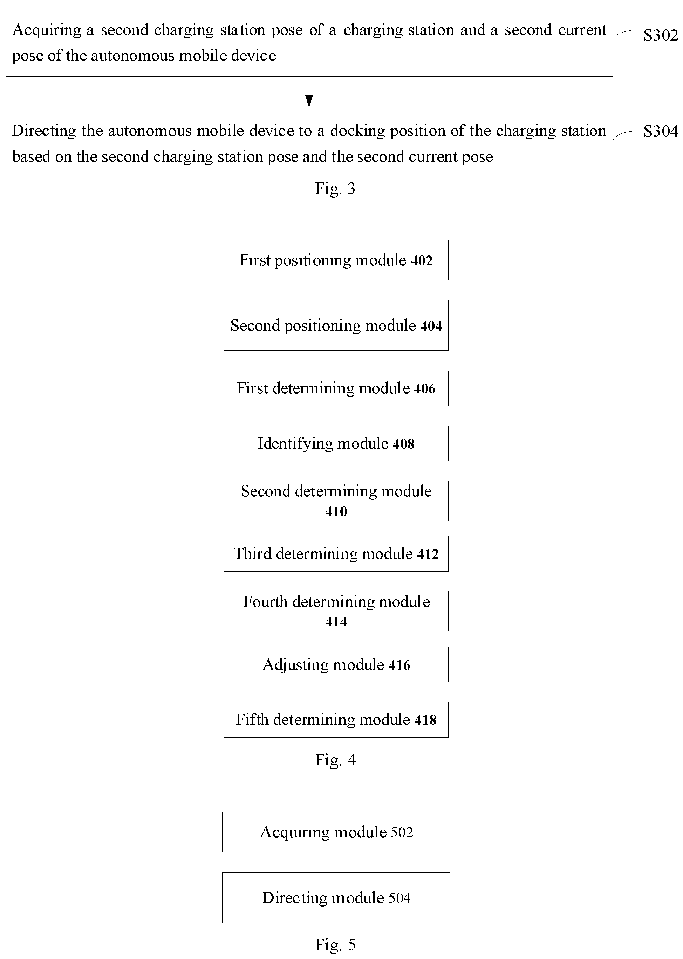

By referring to Fig. 3, a schematic flowchart of steps of a method for controlling an autonomous mobile device in non-claimed embodiment III of the present disclosure is shown.

The method includes the following steps:
Step S302: acquiring a second charging station pose of a charging station and a second current pose of the autonomous mobile device.

The second charging station pose is obtained by detecting pose information of an identifier on the charging station using the autonomous mobile device. The identifier comprises an array of feature elements, and the pose information of the identifier comprises a distance and an angle between the feature elements. The angle between the feature elements may be an angle between a line between two adjacent feature elements and a line formed by another feature element, or may be an angle between a line between two adjacent feature elements and another reference line (e.g., a horizontal line).

The second current pose is a reference pose, i.e., the second current pose may be an origin in a coordinate system of the autonomous mobile device. The second charging station pose may be expressed as the pose of the charging station in the coordinate system of the autonomous mobile device.

Step S304: directing the autonomous mobile device to a docking position of the charging station based on the second charging station pose and the second current pose.

Since a relative position relationship between the identifier and the charging station is constant, and a relative position between the docking position of the charging station and the charging station is constant, a relative position between the autonomous mobile device and the charging station may be determined based on the second charging station pose and the second current pose, and then the autonomous mobile device may be directed to the docking position on this basis.

This approach can accurately direct the autonomous mobile device, and improve the docking speed and accuracy.

### Non-claimed embodiment IV

By referring to Fig. 4, a structural block diagram of an apparatus for controlling an autonomous mobile device in non-claimed embodiment IV of the present disclosure is shown.

The apparatus for controlling the mobile device comprises:
a first positioning module 402 configured to perform first positioning on the autonomous mobile device to acquire a first current pose of the autonomous mobile device in a first coordinate system; a second positioning module 404 configured to perform second positioning on the autonomous mobile device when determining, based on the first current pose and a first preset pose of a charging station in the first coordinate system, that a distance between the autonomous mobile device and the charging station is less than or equal to a first preset distance, to obtain a second current pose of the autonomous mobile device in a second coordinate system, the second positioning comprising positioning by detecting an identifier on the charging station using the autonomous mobile device; and a first determining module 406 configured to determine, based on the second current pose and a second preset pose of the charging station in the second coordinate system, a second planned path for directing the autonomous mobile device to a docking position of the charging station.

The autonomous mobile device is equipped with an image collector, and the second positioning module 404 is configured to acquire an environment image collected by the image collector of the autonomous mobile device; and determine, when the environment image comprises an image of the identifier, the second current pose of the autonomous mobile device in the second coordinate system based on pose information of the identifier in the environment image and a real pose of the identifier in the second coordinate system, where a relative pose between the identifier and the charging station is constant.

Alternatively, the second coordinate system takes a pose of the charging station as a coordinate origin; or, the second coordinate system takes a pose of the autonomous mobile device as the coordinate origin.

The second positioning module 404 is further configured to input the environment image into a neural network model for identifying the identifier, and acquire an identification result outputted from the neural network model, where, when the identification result indicates that the identifier is identified, the identification result comprises the pose information of the identifier in the environment image.

The identifier comprises an element array composed of feature elements, the feature elements comprise at least one of: a feature point, a feature line, and a feature pattern, and the pose information of the identifier at least comprises categories and poses of feature elements in the identified identifier.

The poses of the feature elements comprise a distance and an angle between the feature elements.

The real pose of the identifier comprises a spatial distance between two adjacent feature elements of a given category in the identifier in the second coordinate system; and the second positioning module 404 is configured to determine the distance and the angle between the two adjacent feature elements of the given category based on the categories and the poses of the feature elements in the identifier when determining the second current pose of the autonomous mobile device in the second coordinate system based on the pose information of the identifier in the environment image and the real pose of the identifier in the second coordinate system; and determine the second current pose of the autonomous mobile device in the second coordinate system based on the distance and the spatial distance between the two adjacent feature elements of the given category and whether there is an angle therebetween.

Alternatively, the second positioning module 404 is further configured to adjust the pose of the autonomous mobile device when the environment image does not comprise the image of the identifier, and acquire the environment image after adjusting a pose collected by the image collector of the autonomous mobile device, until a termination condition is satisfied.

Alternatively, the first determining module 406 is configured to determine, based on the second current pose and the second preset pose of the charging station, a traversable global path between the autonomous mobile device and the charging station for use as the second planned path.

Alternatively, the apparatus further comprises: an identifying module 408 configured to perform obstacle detection and second positioning on an environment where the autonomous mobile device is located when the autonomous mobile device moves along the second planned path, to obtain obstacle information and the second current pose of the autonomous mobile device at a current moment; and a second determining module 410 configured to plan a local path based on edge information among the obstacle information, the second current pose at the current moment, and the second preset pose of the charging station, when the obstacle information indicates that an obstacle is detected, and use the local path as a new second planned path.

Alternatively, the first positioning module 402 is configured to determine whether the autonomous mobile device is in a mapped region; and perform first positioning on the autonomous mobile device based on visual mapping data corresponding to the mapped region when the autonomous mobile device is in the mapped region, to obtain the first current pose of the autonomous mobile device in the first coordinate system, where the first coordinate system is a visual coordinate system corresponding to the visual mapping data.

Alternatively, the first positioning module 402 is configured to, when performing first positioning on the autonomous mobile device based on the visual mapping data corresponding to the mapped region to obtain the first current pose of the autonomous mobile device in the first coordinate system, perform feature identification on the environment image collected by the image collector of the autonomous mobile device; and compute the first current pose of the autonomous mobile device in the first coordinate system based on identified feature data and the visual mapping data.

Alternatively, the first positioning module 402 is further configured to at least acquire satellite positioning data corresponding to the autonomous mobile device when the autonomous mobile device is not in the mapped region; and determine a pose of the autonomous mobile device in a geographic coordinate system corresponding to the satellite positioning data at least based on the satellite positioning data, for use as the first current pose.

Alternatively, the apparatus further comprises: a third determining module 412 configured to determine whether the autonomous mobile device is in a docking pose when the autonomous mobile device moves along the second planned path; a fourth determining module 414 configured to determine a pose adjustment value of the autonomous mobile device based on the second current pose and the docking pose when the autonomous mobile device is not in the docking pose; and an adjusting module 416 configured to adjust the pose of the autonomous mobile device based on the pose adjustment value, and continue to execute the determining whether the autonomous mobile device is in the docking pose, until the autonomous mobile device is in the docking pose.

Alternatively, the apparatus further comprises: a fifth determining module 418 configured to determine a docking path when the autonomous mobile device is in the docking pose, and drive the autonomous mobile device to move to the docking position along the docking path.

Alternatively, a positioning accuracy of the second positioning is greater than a positioning accuracy of the first positioning.

The apparatus can achieve the corresponding effects of the above method, so that the description will not be repeated.

### Non-claimed embodiment V

By referring to Fig. 5, a structural block diagram of an apparatus for controlling an autonomous mobile device in non-claimed embodiment V of the present disclosure is shown.

The apparatus comprises:
an acquiring module 502 configured to acquire a second charging station pose of a charging station and a second current pose of the autonomous mobile device, where the second charging station pose is obtained by detecting pose information of an identifier on the charging station using the autonomous mobile device, the second current pose is a reference pose, the identifier comprises an array of feature elements, and the pose information of the identifier comprises a distance and an angle between the feature elements; and
a directing module 504 configured to direct the autonomous mobile device to a docking position of the charging station based on the second charging station pose and the second current pose.

The apparatus can achieve the corresponding effects of the above method, so that the description will not be repeated.

### Embodiment VI

In the present embodiment, an autonomous mobile gardening device is provided, comprising a controller configured to execute the above method for controlling an autonomous mobile gardening device, and achieve the corresponding effects. The description will not be repeated.

According to another non-claimed aspect of the present disclosure, a lawn mower is provided, comprising a controller configured to execute the above method for controlling an autonomous mobile device. This controller can implement the corresponding operations of the above method, and achieve the corresponding effects. The description will not be repeated.

According to another aspect of the present disclosure, a computer storage medium is provided, where the computer storage medium stores a computer program therein, and the computer program, when executed by a processor, implements the above method for controlling an autonomous mobile gardening device. The program can implement the corresponding operations of the above method, and achieve the corresponding effects. The description will not be repeated.

## Claims

1. A method for controlling an autonomous mobile gardening device, comprising:
performing (S102, S202) first positioning on the autonomous mobile gardening device to acquire a first current pose of the autonomous mobile gardening device in a first coordinate system;
performing (S104, S204) second positioning on the autonomous mobile gardening device when determining, based on the first current pose and a first preset pose of a charging station in the first coordinate system, that a distance between the autonomous mobile gardening device and the charging station is less than or equal to a first preset distance, to obtain a second current pose of the autonomous mobile gardening device in a second coordinate system, the second positioning comprising positioning by detecting an identifier on the charging station using the autonomous mobile gardening device; and
determining (S106, S206), based on the second current pose and a second preset pose of the charging station in the second coordinate system, a second planned path for directing the autonomous mobile gardening device to a docking position of the charging station,
wherein the identifier comprises an element array composed of feature elements, the feature elements comprise at least one category of: a feature point, a feature line, and a feature pattern,
wherein the autonomous mobile gardening device is equipped with an image collector, and the performing (S104, S204) second positioning on the autonomous mobile gardening device to obtain the second current pose of the autonomous mobile gardening device in the second coordinate system comprises:
acquiring an environment image collected by the image collector of the autonomous mobile gardening device;
inputting the environment image into a neural network model for identifying the identifier, and acquiring an identification result outputted from the neural network model, wherein, when the identification result indicates that the identifier is identified, the identification result comprises pose information of the identifier in the environment image, and the pose information of the identifier at least comprises categories and poses of feature elements in the identified identifier; and
determining, when the environment image comprises an image of the identifier, the second current pose of the autonomous mobile gardening device in the second coordinate system based on the pose information of the identifier in the environment image and a real pose of the identifier in the second coordinate system, wherein a relative pose between the identifier and the charging station is constant, and the real pose of the identifier comprises a spatial distance between two adjacent feature elements of a given category in the identifier in the second coordinate system, and
the determining the second current pose of the autonomous mobile gardening device in the second coordinate system based on the pose information of the identifier in the environment image and the real position of the identifier in the second coordinate system comprises:
determining the distance and the angle between the two adjacent feature elements of the given category based on the categories and the poses of the feature elements in the identifier; and
determining the second current pose of the autonomous mobile gardening device in the second coordinate system based on the distance and the spatial distance between the two adjacent feature elements of the given category and whether there is an angle therebetween.

2. The method according to claim 1, wherein the second coordinate system takes a pose of the charging station as a coordinate origin; or, the second coordinate system takes a pose of the autonomous mobile gardening device as the coordinate origin.

3. The method according to claim 1, wherein the poses of the feature elements comprise a distance and an angle between the feature elements.

4. The method according to claim 1 or 2, wherein the performing (S104, S204) second positioning on the autonomous mobile gardening device to obtain the second current pose of the autonomous mobile gardening device in the second coordinate system further comprises:
adjusting the pose of the autonomous mobile gardening device when the environment image does not comprise the image of the identifier, and acquiring the environment image after adjusting a pose collected by the image collector of the autonomous mobile gardening device, until a termination condition is satisfied.

5. The method according to claim 1, wherein the determining (S106, S206), based on the second current pose and the second preset pose of the charging station in the second coordinate system, the second planned path for directing the autonomous mobile gardening device to the docking position of the charging station comprises:
determining, based on the second current pose and the second preset pose of the charging station, a traversable global path between the autonomous mobile gardening device and the docking position of the charging station for use as the second planned path.

6. The method according to claim 5, wherein the method further comprises:
performing (S208) obstacle detection and second positioning on an environment where the autonomous mobile gardening device is located when the autonomous mobile gardening device moves along the second planned path, to obtain obstacle information and the second current pose of the autonomous mobile gardening device at a current moment; and
planning (S210) a local path based on edge information among the obstacle information, the second current pose at the current moment, and the second preset pose of the charging station, when the obstacle information indicates that an obstacle is detected, and using the local path as a new second planned path.

7. The method according to claim 1, wherein the performing first positioning on the autonomous mobile gardening device to acquire the first current pose of the autonomous mobile gardening device in the first coordinate system comprises:
determining whether the autonomous mobile gardening device is in a mapped region; and
performing first positioning on the autonomous mobile gardening device based on visual mapping data corresponding to the mapped region when the autonomous mobile gardening device is in the mapped region, to obtain the first current pose of the autonomous mobile gardening device in the first coordinate system, wherein the first coordinate system is a visual coordinate system corresponding to the visual mapping data.

8. The method according to claim 1, wherein the method further comprises:
determining (S212) whether the autonomous mobile gardening device is in a docking pose when the autonomous mobile gardening device moves along the second planned path;
determining (S214) a pose adjustment value of the autonomous mobile gardening device based on the second current pose and the docking pose when the autonomous mobile gardening device is not in the docking pose; and
adjusting (S216) the pose of the autonomous mobile gardening device based on the pose adjustment value, and continuing to execute the determining whether the autonomous mobile gardening device is in the docking pose, until the autonomous mobile gardening device is in the docking pose.

9. The method according to claim 1, wherein a positioning accuracy of the second positioning is greater than a positioning accuracy of the first positioning.

10. An autonomous mobile gardening device, comprising a controller configured to execute the method for controlling the autonomous mobile gardening device according to any one of claims 1-9.

11. A computer storage medium, storing a computer program therein, wherein the computer program, when executed by a processor, implements the method for controlling an autonomous mobile gardening device according to any one of claims 1 to 9.

## Patentansprüche

1. Verfahren zur Steuerung eines autonomen mobilen Gartengeräts, umfassend:
Durchführen (S102, S202) einer ersten Positionierung am autonomen mobilen Gartengerät, um eine erste aktuelle Pose des autonomen mobilen Gartengeräts in einem ersten Koordinatensystem zu erwerben;
Durchführen (S104, S204), wenn basierend auf der ersten aktuellen Pose und einer ersten voreingestellten Pose einer Ladestation im ersten Koordinatensystem bestimmt wird, dass ein Abstand zwischen dem autonomen mobilen Gartengerät und der Ladestation kleiner oder gleich einem ersten voreingestellten Abstand ist, einer zweiten Positionierung am autonomen mobilen Gartengerät, um eine zweite aktuelle Pose des autonomen mobilen Gartengeräts in einem zweiten Koordinatensystem zu erwerben, wobei die zweite Positionierung eine Positionierung durch ein Erfassen einer Kennung an der Ladestation unter Verwendung des autonomen mobilen Gartengeräts umfasst; und
Bestimmen (S106, S206), basierend auf der zweiten aktuellen Pose und einer zweiten voreingestellten Pose im zweiten Koordinatensystem, eines zweiten geplanten Pfads zur Führung des autonomen mobilen Gartengeräts zu einer Andockposition der Ladestation,
wobei die Kennung ein Elementarray umfasst, das aus Merkmalselementen besteht, wobei die Merkmalselemente mindestens eine der folgenden Kategorien umfassen: Merkmalspunkt, Merkmalslinie und Merkmalsmuster;
wobei das autonome mobile Gartengerät mit einem Bildersammler ausgestattet ist, und wobei das "Durchführen (S104, S204) einer zweiten Positionierung am autonomen mobilen Gartengerät, um die zweite aktuelle Pose des autonomen mobilen Gartengeräts in dem zweiten Koordinatensystem zu erwerben" umfasst:
Erwerben eines Umgebungsbildes, das vom Bildersammler des autonomen mobilen Gartengeräts erfasst wird;
Eingeben des Umgebungsbildes in ein neuronales Netzwerkmodell zum Erkennen der Kennung und Erwerben eines vom neuronalen Netzwerkmodell ausgegebenen Erkennungsergebnisses, wobei, wenn das Erkennungsergebnis angibt, dass die Kennung erkannt wurde, das Erkennungsergebnis Poseninformationen der Kennung im Umgebungsbild umfasst, wobei die Poseninformationen der Kennung zumindest Kategorien und Posen von Merkmalselementen in der erkannten Kennung umfassen; und
Bestimmen, wenn das Umgebungsbild ein Bild der Kennung enthält, der zweiten aktuellen Pose des autonomen mobilen Gartengeräts im zweiten Koordinatensystem basierend auf den Poseninformationen der Kennung im Umgebungsbild und einer realen Pose der Kennung im zweiten Koordinatensystem, wobei die relative Pose zwischen der Kennung und der Ladestation konstant ist und die reale Pose der Kennung eine räumliche Entfernung zwischen zwei benachbarten Merkmalselementen einer gegebenen Kategorie in der Kennung im zweiten Koordinatensystem umfasst, und
wobei das "Bestimmen der zweiten aktuellen Pose des autonomen mobilen Gartengeräts im zweiten Koordinatensystem basierend auf den Poseninformationen der Kennung im Umgebungsbild und der realen Pose der Kennung im zweiten Koordinatensystem" umfasst:
Bestimmen des Abstands und des Winkels zwischen den beiden benachbarten Merkmalselementen der gegebenen Kategorie basierend auf den Kategorien und den Posen der Merkmalselemente in der Kennung; und
Bestimmen der zweiten aktuellen Pose des autonomen mobilen Gartengeräts im zweiten Koordinatensystem basierend auf dem Abstand und der räumlichen Entfernung zwischen den beiden benachbarten Merkmalselementen der gegebenen Kategorie und basierend darauf, ob dazwischen ein Winkel besteht.

2. Verfahren nach Anspruch 1, wobei das zweite Koordinatensystem eine Pose der Ladestation als Koordinatenursprung annimmt; oder wobei das zweite Koordinatensystem eine Pose des autonomen mobilen Gartengeräts als Koordinatenursprung annimmt.

3. Verfahren nach Anspruch 1, wobei die Posen der Merkmalselemente einen Abstand und einen Winkel zwischen den Merkmalselementen umfassen.

4. Verfahren nach Anspruch 1 oder 2, wobei das "Durchführen (S104, S204) einer zweiten Positionierung am autonomen mobilen Gartengerät, um die zweite aktuelle Pose des autonomen mobilen Gartengeräts in dem zweiten Koordinatensystem zu erwerben" ferner umfasst:
Anpassen der Pose des autonomen mobilen Gartengeräts, wenn das Umgebungsbild das Bild der Kennung nicht enthält, und Erwerben des Umgebungsbilds nach Anpassen einer vom Bildersammler des autonomen mobilen Gartengeräts erfassten Pose, bis eine Abbruchbedingung erfüllt ist.

5. Verfahren nach Anspruch, wobei das "Bestimmen (S106, S206), basierend auf der zweiten aktuellen Pose und der zweiten voreingestellten Pose im zweiten Koordinatensystem, des zweiten geplanten Pfads zur Führung des autonomen mobilen Gartengeräts zu der Andockposition der Ladestation" ferner umfasst:
Bestimmen, basierend auf der zweiten aktuellen Pose und der zweiten voreingestellten Pose der Ladestation, eines befahrbaren globalen Pfads zwischen dem autonomen mobilen Gartengerät und der Andockposition der Ladestation zur Verwendung als der zweite geplante Pfad.

6. Verfahren nach Anspruch 5, wobei das Verfahren ferner umfasst:
Durchführen (S208), wenn sich das autonome mobile Gartengerät entlang des zweiten geplanten Pfades bewegt, einer Hinderniserkennung und einer zweiten Positionierung an einer Umgebung, in der sich das autonome mobile Gartengerät befindet, um Hindernisinformationen und die zweite aktuelle Pose des autonomen mobilen Gartengeräts in einem aktuellen Moment zu erhalten; und
Planen (S210), wenn die Hindernisinformationen angeben, dass ein Hindernis erkannt wird, eines lokalen Pfads basierend auf Kanteninformationen in den Hindernisinformationen, der zweiten aktuellen Pose im aktuellen Moment und der zweiten voreingestellten Pose der Ladestation, und Verwenden des lokalen Pfads als neuen zweiten geplanten Pfad.

7. Verfahren nach Anspruch 1, wobei das "Durchführen einer ersten Positionierung am autonomen mobilen Gartengerät, um die erste aktuelle Pose des autonomen mobilen Gartengeräts in dem ersten Koordinatensystem zu erwerben" umfasst:
Bestimmen, ob sich das autonome mobile Gartengerät in einem kartierten Bereich befindet; und
Durchführen, wenn sich das autonome mobile Gartengerät in dem kartierten Bereich befindet, einer ersten Positionierung an dem autonomen mobilen Gartengerät basierend auf visuellen Kartierungsdaten, die dem kartierten Bereich entsprechen, um die erste aktuelle Pose des autonomen mobilen Gartengeräts im ersten Koordinatensystem zu erhalten, wobei das erste Koordinatensystem ein visuelles Koordinatensystem ist, das den visuellen Kartierungsdaten entspricht.

8. Verfahren nach Anspruch 1, wobei das Verfahren ferner umfasst:
Bestimmen (S212), ob sich das autonome mobile Gartengerät in einer Pose zum Andocken befindet, wenn sich das autonome mobile Gartengerät entlang des zweiten geplanten Pfads bewegt;
Bestimmen (S214) eines Posenanpassungswerts des autonomen mobilen Gartengeräts basierend auf der zweiten aktuellen Pose und der Pose zum Andocken, wenn sich das autonome mobile Gartengerät nicht in der Pose zum Andocken befindet; und
Anpassen (S216) der Pose des autonomen mobilen Gartengeräts basierend auf dem Posenanpassungswert, und Fortsetzen des Bestimmens, ob sich das autonome mobile Gartengerät in der Pose zum Andocken befindet, bis sich das autonome mobile Gartengerät in der Pose zum Andocken befindet.

9. Verfahren nach Anspruch 1, wobei die Positioniergenauigkeit der zweiten Positionierung größer ist als die Positioniergenauigkeit der ersten Positionierung.

10. Autonomes mobiles Gartengerät, umfassend eine Steuereinrichtung, die dazu konfiguriert ist, das Verfahren zur Steuerung des autonomen mobilen Gartengeräts nach einem der Ansprüche 1 bis 9 auszuführen.

11. Computerspeichermedium, auf dem ein Computerprogramm gespeichert ist, wobei das Computerprogramm bei seinem Ausführen durch einen Prozessor das Verfahren zur Steuerung eines autonomen mobilen Gartengeräts nach einem der Ansprüche 1 bis 9 implementiert.

## Revendications

1. Procédé de commande d'un appareil de jardinage mobile autonome, comprenant :
effectuer (S102, S202) un premier positionnement sur l'appareil de jardinage mobile autonome pour acquérir une première posture actuelle de l'appareil de jardinage mobile autonome dans un premier système de coordonnées ;
effectuer (S104, S204) un second positionnement sur l'appareil de jardinage mobile autonome lorsqu'il est déterminé, sur la base de la première posture actuelle et d'une première posture prédéfinie d'une station de recharge dans le premier système de coordonnées, qu'une distance entre l'appareil de jardinage mobile autonome et la station de recharge est inférieure ou égale à une première distance prédéfinie, afin d'obtenir une seconde posture actuelle de l'appareil de jardinage mobile autonome dans un second système de coordonnées, le second positionnement comprenant un positionnement par détection d'un identifiant sur la station de recharge utilisant l'appareil de jardinage mobile autonome ; et
déterminer (S106, S206), sur la base de la seconde posture actuelle et d'une seconde posture prédéfinie de la station de recharge dans le second système de coordonnées, un second chemin planifié pour diriger l'appareil de jardinage mobile autonome vers une position d'ancrage de la station de recharge,
dans lequel l'identifiant comprend un tableau d'éléments composé d'éléments de caractéristique, les éléments de caractéristique comprennent au moins une catégorie parmi : un point caractéristique, une ligne caractéristique et un motif caractéristique, dans lequel l'appareil de jardinage mobile autonome est équipé d'un collecteur d'images, et l'étape de effectuer (S104, S204) un second positionnement sur l'appareil de jardinage mobile autonome afin d'obtenir la seconde posture actuelle de l'appareil de jardinage mobile autonome dans le second système de coordonnées comprend :
acquérir une image d'environnement collectée par le collecteur d'images de l'appareil de jardinage mobile autonome ;
entrer l'image d'environnement dans un modèle de réseau neuronal pour identifier l'identifiant, et acquérir un résultat d'identification fourni par le modèle de réseau neuronal, dans lequel, lorsque le résultat d'identification indique que l'identifiant est identifié, le résultat d'identification comprend des informations de posture de l'identifiant dans l'image d'environnement, et les informations de posture de l'identifiant comprennent au moins des catégories et des postures d'éléments de caractéristique dans l'identifiant identifié ; et
déterminer, lorsque l'image d'environnement comprend une image de l'identifiant, la seconde posture actuelle de l'appareil de jardinage mobile autonome dans le second système de coordonnées sur la base des informations de posture de l'identifiant dans l'image d'environnement et une posture réelle de l'identifiant dans le second système de coordonnées, dans lequel une posture relative entre l'identifiant et la station de recharge est constante, et la posture réelle de l'identifiant comprend une distance spatiale entre deux éléments de caractéristique adjacents d'une catégorie donnée dans l'identifiant dans le second système de coordonnées, et
l'étape de déterminer la seconde posture actuelle de l'appareil de jardinage mobile autonome dans le second système de coordonnées sur la base des informations de posture de l'identifiant dans l'image d'environnement et la posture réelle de l'identifiant dans le second système de coordonnées comprend :
déterminer la distance et l'angle entre les deux éléments de caractéristique adjacents de la catégorie donnée sur la base des catégories et des postures des éléments de caractéristique dans l'identifiant ; et
déterminer la seconde posture actuelle de l'appareil de jardinage mobile autonome dans le second système de coordonnées sur la base de la distance et de la distance spatiale entre les deux éléments de caractéristique adjacents de la catégorie donnée et si un angle existe entre ceux-ci.

2. Procédé selon la revendication 1, dans lequel le second système de coordonnées prend une posture de la station de recharge comme origine de coordonnées ; ou, le second système de coordonnées prend la posture de l'appareil de jardinage mobile autonome comme origine des coordonnées.

3. Procédé selon la revendication 1, dans lequel les postures des éléments de caractéristique comprennent une distance et un angle entre les éléments de caractéristique.

4. Procédé selon la revendication 1 ou 2, dans lequel l'étape d'effectuer (S104, S204) un second positionnement sur l'appareil de jardinage mobile autonome afin d'obtenir la seconde posture actuelle de l'appareil de jardinage mobile autonome dans le second système de coordonnées comprend en outre :
ajuster la posture de l'appareil de jardinage mobile autonome lorsque l'image d'environnement ne comprend pas l'image de l'identifiant, et acquérir l'image d'environnement après l'ajustement d'une posture collectée par le collecteur d'images de l'appareil de jardinage mobile autonome, jusqu'à ce qu'une condition de terminaison soit satisfaite.

5. Procédé selon la revendication 1, dans lequel l'étape de déterminer (S106, S206), sur la base de la seconde posture actuelle et de la seconde posture prédéfinie de la station de recharge dans le second système de coordonnées, le second chemin planifié pour diriger l'appareil de jardinage mobile autonome vers la position d'ancrage de la station de recharge comprend :
déterminer, sur la base de la seconde posture actuelle et de la seconde posture prédéfinie de la station de recharge, un chemin global traversable entre l'appareil de jardinage mobile autonome et la position d'ancrage de la station de recharge pour utiliser comme second chemin planifié.

6. Procédé selon la revendication 5, comprenant en outre :
effectuer (S208) une détection d'obstacles et un second positionnement dans un environnement où se situe l'appareil de jardinage mobile autonome lorsque l'appareil de jardinage mobile autonome se déplace le long du second chemin planifié afin d'obtenir des informations d'obstacle et la seconde posture actuelle de l'appareil de jardinage mobile autonome à un moment donné ; et
planifier (S210) un chemin local sur la base des informations de bord parmi les informations d'obstacle, la seconde posture actuelle au moment actuel et la seconde posture prédéfinie de la station de recharge, lorsque les informations d'obstacle indiquent qu'un obstacle est détecté, et utiliser le chemin local comme nouvelle second chemin planifié.

7. Procédé selon la revendication 1, dans lequel l'étape d'effectuer un premier positionnement sur l'appareil de jardinage mobile autonome pour acquérir la première posture actuelle de l'appareil de jardinage mobile autonome dans un premier système de coordonnées comprend :
déterminer si l'appareil de jardinage mobile autonome se trouve dans une région cartographiée ; et
effectuer un premier positionnement sur l'appareil de jardinage mobile autonome sur la base de données de cartographie visuelle correspondant à la région cartographiée lorsque l'appareil de jardinage mobile autonome se situe dans la région cartographiée, afin d'obtenir la première posture actuelle de l'appareil de jardinage mobile autonome dans le premier système de coordonnées, dans lequel le premier système de coordonnées est un système de coordonnées visuelles correspondant aux données de cartographie visuelle.

8. Procédé selon la revendication 1, dans lequel le procédé comprend en outre : déterminer (S212) si l'appareil de jardinage mobile autonome est dans une posture d'ancrage lorsque l'appareil de jardinage mobile autonome se déplace le long du second chemin planifié ;
déterminer (S214) une valeur d'ajustement de posture de l'appareil de jardinage mobile autonome sur la base de la seconde posture actuelle et de la posture d'ancrage lorsque l'appareil de jardinage mobile autonome n'est pas dans la posture d'amarrage ; et
ajuster (S216) la posture de l'appareil de jardinage mobile autonome sur la base de la valeur d'ajustement de posture, et continuer à exécuter la détermination si l'appareil de jardinage mobile autonome est dans la posture d'amarrage, jusqu'à ce que l'appareil de jardinage mobile autonome soit dans la posture d'amarrage.

9. Procédé selon la revendication 1, dans lequel la précision de positionnement du second positionnement est supérieure à la précision de positionnement du premier positionnement.

10. Appareil de jardinage mobile autonome, comprenant un contrôleur configuré pour exécuter le procédé de commande de l'appareil de jardinage mobile autonome selon l'une quelconque des revendications 1 à 9.

11. Support de stockage informatique, sur lequel est stocké un programme informatique, dans lequel le programme informatique qui, lorsqu'il est exécuté par un processeur, met en œuvre le procédé de commande d'un appareil de jardinage mobile autonome selon l'une quelconque des revendications 1 à 9.
